# EUROPEAN PATENT SPECIFICATION

(11) **EP 3 077 642 B1**
(45) Date of publication and mention of the grant of the patent: **17.07.2019**
(21) Application number: 14882627.4
(22) Date of filing: 19.11.2014
(51) Int. Cl.: F02C 7/143, F02C 3/107, F02C 7/10, F02K 3/077

(54) **GAS TURBINE ENGINES WITH INTERCOOLERS AND RECUPERATORS**
GASTURBINENMOTOREN MIT ZWISCHENKÜHLERN UND REKUPERATOREN
MOTEURS À TURBINE À GAZ COMPORTANT DES REFROIDISSEURS INTERMÉDIAIRES ET DES RÉCUPÉRATEURS

(30) Priority: 05.12.2013 US 201361912428 P
(43) Date of publication of application: 12.10.2016
(73) Proprietor: United Technologies Corporation, Farmington, CT 06032 (US)
(72) Inventor: MAGOWAN, John W., Longmeadow, MA 01106 (US)
(74) Representative: Dehns
(86) International application number: PCT/US2014/066273
(87) International publication number: WO 2015/122948

(56) References cited:
- EP-A1- 2 492 472
- EP-A2- 2 295 763
- US-A- 2 504 181
- US-A- 5 081 832
- US-A- 5 678 408
- US-A1- 2002 148 227
- US-A1- 2009 133 380
- US-A1- 2011 225 977
- US-A1- 2012 017 597
- US-A1- 2012 175 886

## Description

### BACKGROUND OF THE INVENTION

### 1. Field of the Invention

The present disclosure relates to gas turbine engines, and more particularly to gas turbine engines with intercoolers and recuperators.

### 2. Description of Related Art

Thrust specific fuel consumption is an indication of the fuel efficiency of a gas turbine engine design measured in terms fuel flow rate per unit of thrust. For a given engine design, thrust specific fuel consumption is generally a function of core efficiency and propulsive efficiency. Core efficiency measures the quality of the thermodynamic cycle and indicates the efficiency with which the engine core generates power for propulsive thrust. Propulsive efficiency measures how effectively the engine converts power into propulsive thrust. Improving either or both of core efficiency and propulsive efficiency improves thrust specific fuel consumption.

Propulsive efficiency generally improves as jet velocity nears flight velocity, such as by increasing engine bypass ratio. Some engines include an indirectly coupled fan that rotates more slowly than a directly coupled fan to realize a greater bypass ratio than engines with a directly coupled fan. Core efficiency can be improved through component improvements, such as through engine architecture changes that improve the thermodynamic cycle. One example of engine architecture change that improves the thermodynamic cycle is intercooling. Intercooling improves compressor efficiency by removing heat from the working fluid during compression. This allows for achieving the working fluid compression ratio required for operation with low compressor outlet temperature. Another example of engine architecture changes that improve the thermodynamic cycle is recuperation. Recuperation heats the compressed working fluid between the high-pressure compressor and combustor using engine exhaust, thereby recovering waste heat from the combustion process and decreasing combustor temperature rise.

Conventional efforts to incorporate intercooling and/recuperation into gas turbine engine architecture have been satisfactory for their intended purpose. However, there is a need for improved gas turbine engine architectures incorporating intercoolers and recuperators. The present disclosure provides a solution for these problems.

Examples of known gas turbine engine configurations are disclosed in US-A-2009/0133380 and US-A-2504181.

### SUMMARY OF THE INVENTION

A gas turbine engine includes a first and second stage compressors and an intercooler. The first and second stage compressors are in fluid communication with the intercooler. The engine also includes a combustor and a turbine. The combustor is in fluid communication with the second stage compressor and the turbine. The intercooler cools working fluid as it flows between the first stage compressor and the second stage compressor. The recuperator heats the working fluid flow as the flow moves from the second stage compressor to the combustor using engine exhaust. The intercooler and recuperator are arranged radially outboard of the combustor, wherein the second stage compressor is a reverse flow high-pressure compressor configured to convey working fluid axially forward and radially outward with respect to a rotation axis of the engine.

In certain embodiments, the intercooler is in fluid communication with the first stage compressor on its forward end and in fluid communication with the second stage compressor on its aft end. The intercooler can be a radial flow intercooler. The intercooler can be a cross-flow
plate type intercooler. Working fluid can flow radially outboard through the intercooler for cooling the working fluid with engine bypass air. The intercooler can be a first intercooler, and the engine can include one or more additional intercoolers circumferentially offset from the first intercooler.

In accordance with certain embodiments, the recuperator is a reverse flow recuperator. The recuperator can be a counter flow plate type heat exchanger. The recuperator can be in fluid communication on its aft end with the second stage compressor, and be in fluid communication with the combustor on its forward end. The recuperator can be circumferentially adjacent to the one or more intercoolers. The recuperator can be a first recuperator and the engine can further include a one or more additional recuperators circumferentially offset from the first recuperator.

It is also contemplated that in certain embodiments the engine includes a fan module, a low-pressure spool, and a high-pressure spool. The fan module, low-pressure spool, and high-pressure spool can be serially arranged such that the low-pressure spool connects on its forward end to the fan module and the high-pressure spool is aft of the low-pressure spool. The low-pressure spool can include the first stage compressor on its forward end and the second stage turbine on its aft end. The high-pressure spool can include the first stage turbine on its forward end and the second stage compressor on its aft end such that the second stage turbine is axially adjacent to and forward of the first stage turbine. The second stage compressor can be a centrifugal flow high-pressure compressor. An accessory gearbox can connect to an aft end of the high-pressure spool for powering engine accessories mounted along the engine axis. A gearbox can couple a forward end of the low-pressure spool to a shaft of the fan module, i.e., the engine can be a geared turbofan.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1 is a schematic cross-sectional side elevation view of an exemplary embodiment of a geared turbofan engine constructed in accordance with the present disclosure, showing the axial positions of the intercooler and recuperator; and
Fig. 2 is a schematic cross-sectional front elevation view of the intercoolers and recuperators of the engine of Fig., 1, showing the positions of the intercoolers and recuperators circumferentially.

### DETAILED DESCRIPTION OF THE PREFERRED EMBODIMENTS

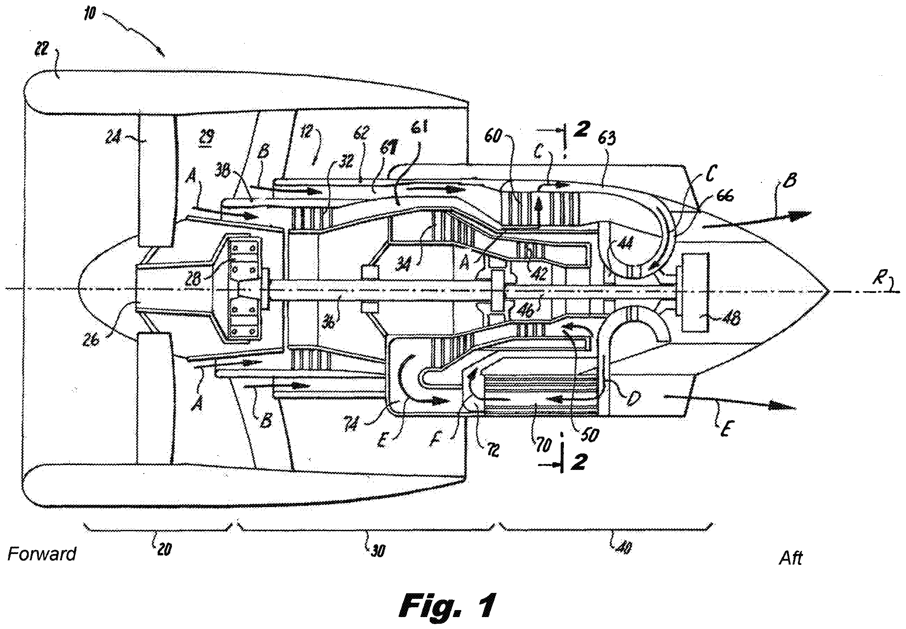

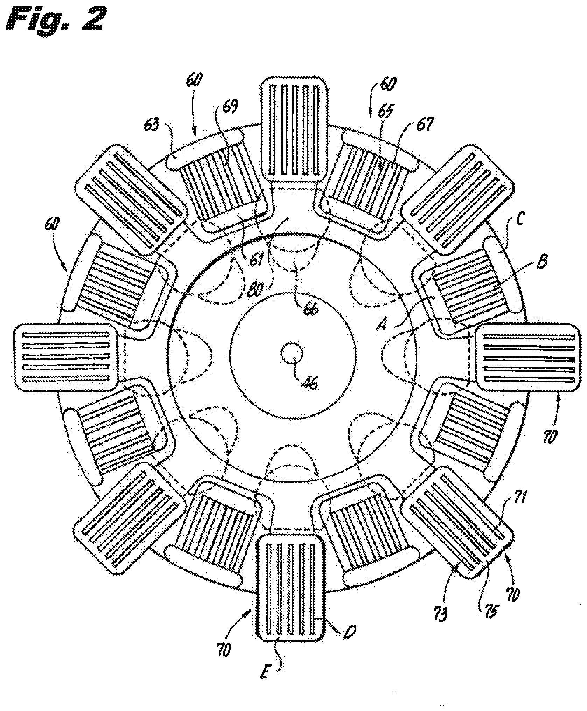

Reference will now be made to the drawings wherein like reference numerals identify similar structural features or aspects of the subject disclosure. For purposes of explanation and illustration, and not limitation, a partial view of an exemplary embodiment of a gas turbine engine in accordance with the disclosure is shown in Fig. 1 and is designated generally by reference character 10. Other embodiments of the engine in accordance with the disclosure, or aspects thereof, are provided in Fig. 2, as will be described. The systems and methods described herein can be used in aircraft engines, such as geared turbofan engines for example.

Gas turbine engine 10 includes an engine core 12 with a fan module 20, a low-pressure spool 30, a high-pressure spool 40, combustors 50, intercoolers 60, and recuperators 70. For purposes of illustration and not for limitation, a single intercooler 60 is shown on the top portion of Fig. 1 and a single recuperator is shown on the bottom portion of Fig. 1.

Fan module 20 is axially arranged on a forward end of gas turbine engine 10. Low-pressure spool 30 is aft of fan module 20 and is coupled thereto by a gearbox 28. High-pressure spool 40 is axially aft of low-pressure shaft 30. Fan module 20, low-pressure spool 30, and high-pressure spool 40 are serially arranged along an engine rotation axis R such that no shaft extends through another shaft.

Fan module 20 includes a fan shroud 22, a fan 24, and a fan shaft 26. Fan shroud 22 surrounds fan 24 and defines a bypass duct 29. Bypass duct 29 extends axially along a portion of the length of engine core 12. Fan 24 connects to fan shaft 26. Fan shaft 26 in turn is operably coupled to low-pressure spool 30 by a gearbox 28 such that low-pressure spool 30 can mechanically rotate fan 24 at a different speed than low-pressure spool 30.

Low-pressure spool 30 includes a first stage compressor 32, a second turbine stage 34, and a low-pressure shaft 36. Low-pressure shaft 36 couples first stage compressor 32 to second stage turbine 34 such that first stage compressor 32 is arranged axially forward of second stage turbine 34. First stage compressor 32 is an axial flow, low-pressure compressor. Second stage turbine 34 is a low-pressure turbine.

High-pressure spool 40 includes a first stage turbine 42, a second stage compressor 44, and a high-pressure shaft 46. High-pressure shaft 46 couples first stage turbine 42 to second stage compressor 44 such that first stage turbine 42 is arranged axially forward of second stage compressor 44. First stage turbine 42 is a high-pressure turbine. Second stage compressor 44 can be a centrifugal flow, high-pressure compressor configured to compress and direct working fluid radially outward with respect to rotation axis R. An engine accessory gearbox 48 connects on an aft end of high-pressure shaft 46, axially in-line with high-pressure shaft 46.

Intercoolers 60 and recuperators 70 are arranged axially along high-pressure shaft 46. Each of the plurality of intercoolers 60 and recuperators 70 are radially offset with respect to engine rotation axis R such that intercoolers 60 and recuperators 70 are arranged radially outboard from engine rotation axis R. Combustors 50 are arranged inboard of intercoolers 60 and recuperators 70 such that intercoolers 60, recuperators 70, and combustors 50 share a common axial position and have different radial offsets with respect to rotation axis R. As illustrated, recuperators 70 have a greater radial offset than intercoolers 60 and intercoolers 60 have a greater radial offset than combustors 50.

With continuing reference to Fig. 1, fluid and heat flows through gas turbine engine 10 will now be described. A first splitter 38 arranged radially outboard of engine core 12 defines a compressor inlet and working fluid duct. The working fluid duct places first stage compressor 32 in fluid communication with bypass duct 29. First stage compressor 32 is in turn configured to compress a working fluid flow A received through the compressor inlet and working fluid inlet duct.

The working fluid inlet duct also places intercoolers 60 in fluid communication with first stage compressor 34 and second stage compressor 44 in fluid communication with intercoolers 60. Intercoolers 60 are also in fluid communication with bypass duct 29 through a plurality of cooling air ducts 67 defined by a second splitter 62 and arranged radially outboard of first splitter 38. Cooling air ducts 67 are arranged radially outboard of first splitter 38 and are configured to supply a coolant flow B formed from a portion of air traversing bypass duct 29. Intercoolers 60 receive both working fluid flow A and coolant flow B, and exchange heat from working fluid flow A and into coolant flow B using a plurality of cross-flow plate cooling bodies 65 (shown in Fig. 2). Cross-flow plate cooling bodies 65 are configured for exchanging heat between working fluid flow A and coolant flow B. Once coolant flow B traverses intercoolers 60, the flow exits engine core 12 to the external atmosphere through cooling air vents 80 (shown in Fig. 2) arranged between the ducts that convey working fluid to second stage compressor 44. As illustrated, intercoolers 60 convey working fluid radially outboard, discharging working fluid flow A as a cooled and compressed flow C (shown in the upper portion of Fig. 1) in an axially aft direction.

Second stage compressor 44 is in fluid communication with intercoolers 60 and is configured for further compressing working fluid received from intercoolers 60. Specifically, cooled working fluid flow C is collected from intercoolers 60 in a plurality of second stage compressor ducts 63 (eight as illustrated in Fig. 2) which respectively convey the working fluid inward and which join together and enter turning passage 66 prior to entering the second stage compressor 44. Turning passage 66 directs the working fluid radially inward and changes its flow direction from an aft direction to a forward direction, conveying the flow to an aft end of second stage compressor 44. Second stage compressor 44 thereafter receives cooled and compressed working fluid flow C, further compresses it, and discharges the flow as a further compressed working fluid flow D (shown in the lower portion of Fig. 1) into a plurality of radial passages extending radially outward from rotation axis R and leading to aft ends of recuperators 70.

Recuperators 70 are in fluid communication with second stage compressor 44 through the radial passages, and receive cooled and further compressed working fluid D therethrough. Recuperators 70 are also in fluid and thermal communication with an engine combustion products flow E, and are configured to heat further compressed working fluid flow D by exchanging heat between engine combustion products flow E and further compressed working fluid flow D. As illustrated, recuperators 70 are counter flow recuperators, respectively configured to (a) receive forward directed further compressed working fluid flow D, (b) receive an aft directed combustion products flow E, (c) and transfer heat from combustion products flow E and into further compressed working fluid flow D. Heat transfer can be, for example, through respective surfaces of plate heating bodies 73 (shown in Fig. 2) disposed within recuperators 70. Recuperators 70 thereafter discharge the heated working fluid as a forward directed, further compressed, heated working fluid F into second turning passages 72.

Second turning passages 72 (only one identified for clarity purposes) place recuperators 70 in fluid communication with combustors 50. Second turning passages 72 reverse axial direction of further compressed, heated working fluid F, reversing its flow direction at discharge ends of recuperators 70 and again immediately aft of inlet ends of the combustors 50. Combustors 50 in turn receive the further compressed and heated working fluid flow F, mix it with fuel, and ignite the mixture. This raises its temperature and pressure, forming a combustion products flow E, e.g. an exhaust gas flow.

Combustors 50 discharge combustion products flow E into first and second turbine stages 42 and 34. As combustion products flow E transit first and second turbine stages 42 and 34 in an axially forward direction, first and second turbine stages 42 and 34 successively expand and extract work from combustion products flow E. The extracted work is applied to low-pressure and high-pressure shafts 36 and 46 for powering fan 24, first stage compressor 32, second stage compressor 44, and engine accessories coupled to accessory gearbox 48. The expanded combustion products flow E is discharged into a third turning passage 74. Third turning passage 74 conveys combustion products flow E radially outward, reverses its flow direction from an axially forward to an axially aft direction, and delivers combustion products flow E as an aft-directed flow to recuperators 70. Combustion products flow E thereafter traverses recuperators 70, transfers heat into working fluid therein as described above, and exits engine core 12.

With reference to Fig. 2, a cross-section of engine core 12 taken axially through the high-pressure spool as shown. Intercoolers 60 and recuperators 70 are circumferentially arranged about engine rotation axis R in an alternating arrangement, the illustrated embodiment of gas turbine engine 10 having eight intercoolers, eight recuperators, and corresponding fluid ducts. As will be appreciated by those skilled in the art, this is for illustration purposes only and nonlimiting. It is contemplated that embodiments of gas turbine engine 10 can have fewer or more intercoolers and/or recuperators.

Each of intercoolers 60 includes a first stage compressor duct 61, a second stage compressor duct 63, a plurality of cooling plate bodies 65, and a cooling air duct 67. Each of the plurality of cooling plate bodies 65 is disposed within cooling air duct 67 and houses a working fluid duct 69. Each working fluid duct 69 fluidly couples the first stage compressor duct 61 with second stage compressor duct 63.

Compressed working fluid flow A transits intercooler 60 by traversing first stage compressor duct and the plurality of working fluid ducts 69, entering second stage compressor duct 63. Coolant flow B transits intercooler 60 through cooling air duct 67. As each of the flows transits intercooler 60, the plurality of cooling plate bodies transfer heat from compressed working fluid flow A and into coolant flow B. This cools compressed working fluid B, forms cooled and compressed working fluid flow C, and potentially improves the efficiency of second stage compressor 44.

Each of recuperators 70 includes a plurality of working fluid ducts 71 and an exhaust duct 75. The plurality of working fluid ducts 71 are housed within respective heating plate bodies 73. Each of heating plate bodies 73 in turn is housed within exhaust duct 75, respectively.

Further compressed working fluid flow D transits recuperators 70 through the plurality of working fluid ducts 71. Combustion products flow E transits recuperator 70 through engine exhaust duct 75. As each of the flows transit recuperators 70, heating plate bodies 73 transfers heat from combustion products flow E into further compressed working fluid flow D. This improves engine efficiency by harvesting heat from combustion products flow E and warming further compressed working fluid D prior to entry to combustor 50.

Engine architecture including intercoolers and recuperators potentially provides high core efficiency using a relatively small number of stages. Reverse flow (i.e. forward directed) through the second stage compressor, recuperator, first turbine stage, and/or second turbine stage potentially allows for the use of relatively short shafts in a serial arrangement and provides engine architecture without one shaft extending through another shaft. Reverse flow recuperators and a second stage compressor potentially allow for efficient component packaging as the recuperators can be located axially adjacent to the intercoolers. Overall engine length in turn potentially allows for shorter engine length than conventional engine architectures incorporating intercooling and recuperation.

The methods and systems of the present disclosure, as described above and shown in the drawings, provide for gas turbine engines with superior properties including the potential for improved core efficiency without corresponding loss of propulsive efficiency as well as compact engine architecture. While the apparatus and methods of the subject disclosure have been shown and described with reference to preferred embodiments, those skilled in the art will readily appreciate that changes and/or modifications may be made thereto without departing from scope of the subject disclosure.

## Claims

1. A gas turbine engine (10), comprising:
a first stage compressor (32);
an intercooler (60) in fluid communication with the first stage compressor and configured to cool working fluid as it exits the first stage compressor;
a second stage compressor (44) in fluid communication with the intercooler;
a combustor (50) in fluid communication with the second stage compressor; and
a recuperator (70) in fluid communication with the combustor and configured to heat the working fluid as it exits the second stage compressor using engine exhaust, wherein the intercooler and recuperator are arranged radially outboard of the combustor,
**characterised in that** the second stage compressor (44) is a reverse flow high-pressure compressor configured to convey working fluid axially forward and radially outward with respect to a rotation axis (R) of the engine.

2. An engine (10) as recited in claim 1, wherein the intercooler (60) is in fluid communication with the first stage compressor (32) on its forward end and in fluid communication with the second stage compressor (44) on its aft end.

3. An engine (10) as recited in claim 1, wherein the intercooler (60) is a radial flow intercooler; and
preferably wherein the intercooler (60) is configured for flowing working fluid radially outboard for cooling with engine bypass air.

4. An engine (10) as recited in claim 1, wherein the intercooler (60) is a cross- flow plate type intercooler; and/or
wherein the recuperator (70) is a reverse flow recuperator.

5. An engine (10) as recited in claim 1, wherein the recuperator (70) is a counter flow plate type heat exchanger.

6. An engine (10) as recited in claim 1, wherein the recuperator (70) is in fluid communication with the second stage compressor (44) on its aft end and in fluid communication with the combustor (50) on its forward end.

7. An engine (10) as recited in claim 1, wherein the intercooler (60) is a first intercooler and further including a second intercooler circumferentially offset from the first intercooler.

8. An engine (10) as recited in claim 7, wherein the recuperator (70) is circumferentially adjacent to both the first and the second intercooler; and/or
wherein the recuperator (70) is a first recuperator and further including one or more second recuperator, the one or more second recuperator circumferentially adjacent to the second intercooler.

9. An engine as in any of the preceding claims wherein the engine is a geared turbofan engine, comprising:
a fan (24) connected to a gearbox (28);
a low-pressure spool (30) including the first stage compressor (32) and a second stage turbine (34), wherein the first stage compressor is axially adjacent the second stage turbine and the spool is connected to the gearbox at its forward end;
a high-pressure spool (40) including a first stage turbine (42) and the second stage compressor (44), wherein first stage turbine is axially forward of the second stage compressor and the spool is connected to low-pressure spool at its forward end;
wherein the intercooler (60) is aft of the second stage turbine and in fluid communication with the first stage compressor, wherein the intercooler is configured for cooling working fluid flow (A) exiting the first stage compressor; and
a recuperator (70) aft of the second stage turbine and in thermal communication with the second stage compressor, wherein the recuperator is configured for heating working fluid (D) exiting the second stage compressor using engine exhaust (E), wherein the intercooler and recuperator are arranged radially outboard of the combustor.

10. A geared turbofan engine as recited in claim 9, wherein the fan (24), low-pressure spool (30), and high-pressure spool (40) are serially arranged such that the low-pressure spool connects to the fan on its forward end and connects to the high-pressure spool on its aft end.

11. A geared turbofan engine as recited in claim 9 and 10, wherein the low-pressure spool (30) includes the first stage compressor (32) and the second stage turbine (34), the second stage turbine being aft of the first stage compressor; and/or
wherein the high-pressure spool (40) includes the first stage turbine (42) and the second stage compressor (44), the first stage turbine being arranged forward of the second stage compressor.

12. A geared turbofan engine as recited in claim 9 to 11, wherein the second stage compressor (44) is a centrifugal flow compressor.

13. A geared turbofan engine as recited in claim 9 to 12, further including a gearbox (28) coupling the fan (24) to the low-pressure spool (30); and/or
further including an accessory gearbox (48) connected to an aft end of the high-pressure spool (40) and mounted along the engine axis (R).

## Patentansprüche

1. Gasturbinenmotor (10), umfassend:
einen Erststufenverdichter (32);
einen Zwischenkühler (60) in Fluidkommunikation mit dem Erststufenverdichter und konfiguriert, um Arbeitsfluid zu kühlen, während es aus dem Erststufenverdichter austritt;
einen Zweitstufenverdichter (44) in Fluidkommunikation mit dem Zwischenkühler;
eine Brennkammer (50) in Fluidkommunikation mit dem Zweitstufenverdichter; und
einen Rekuperator (70) in Fluidkommunikation mit der Brennkammer und konfiguriert, um das Arbeitsfluid unter Verwendung von Motorabgas zu erwärmen, während es aus dem Zweitstufenverdichter austritt, wobei der Zwischenkühler und der Rekuperator radial auswärts der Brennkammer angeordnet sind,
**dadurch gekennzeichnet, dass** der Zweitstufenverdichter (44) ein Rückflusshochdruckverdichter ist, der konfiguriert ist, um Arbeitsfluid in Bezug auf eine Drehachse (R) des Motors axial vorwärts und radial auswärts zu transportieren.

2. Motor (10) nach Anspruch 1, wobei der Zwischenkühler (60) in Fluidkommunikation mit dem Erststufenverdichter (32) an seinem vorderen Ende und in Fluidkommunikation mit dem Zweitstufenverdichter (44) an seinem hinteren Ende ist.

3. Motor (10) nach Anspruch 1, wobei der Zwischenkühler (60) ein Radialflusszwischenkühler ist; und
wobei der Zwischenkühler (60) bevorzugt konfiguriert ist, um Arbeitsfluid zur Kühlung mit Motorumgehungsluft radial auswärts zu strömen.

4. Motor (10) nach Anspruch 1, wobei der Zwischenkühler (60) ein querstromplattenartiger Zwischenkühler ist; und/oder wobei der Rekuperator (70) ein Rückflussrekuperator ist.

5. Motor (10) nach Anspruch 1, wobei der Rekuperator (70) ein gegenflussplattenartiger Wärmetauscher ist.

6. Motor (10) nach Anspruch 1, wobei der Rekuperator (70) in Fluidkommunikation mit dem Zweitstufenverdichter (44) an seinem hinteren Ende und in Fluidkommunikation mit der Brennkammer (50) an seinem vorderen Ende ist.

7. Motor (10) nach Anspruch 1, wobei der Zwischenkühler (60) ein erster Zwischenkühler ist, und ferner beinhaltend einen zweiten Zwischenkühler, der umlaufend zu dem ersten Zwischenkühler versetzt ist.

8. Motor (10) nach Anspruch 7, wobei sich der Rekuperator (70) umlaufend benachbart sowohl zu dem ersten als auch dem zweiten Zwischenkühler befindet; und/oder
wobei der Rekuperator (70) ein erster Rekuperator ist, und ferner beinhaltend einen oder mehrere zweite Rekuperatoren, wobei sich der eine oder die mehreren zweiten Rekuperatoren umlaufend benachbart zu dem zweiten Zwischenkühler befinden.

9. Motor nach einem der vorhergehenden Anspruche, wobei der Motor ein Getriebeturbofanmotor ist, umfassend:
einen Fan (24), der mit einem Getriebekasten (28) verbunden ist;
eine Niedrigdruckspule (30), die den Erststufenverdichter (32) und eine Zweitstufenturbine (34) beinhaltet, wobei der Erststufenverdichter axial benachbart zu der Zweitstufenturbine ist und die Spule an ihrem vorderen Ende mit dem Getriebekasten verbunden ist;
eine Hochdruckspule (40), die eine Erststufenturbine (42) und den Zweitstufenverdichter (44) beinhaltet, wobei sich die Erststufenturbine axial vor dem Zweitstufenverdichter befindet und die Spule an ihrem vorderen Ende mit Niedrigdruckspule verbunden ist;
wobei sich der Zwischenkühler (60) hinter der Zweitstufenturbine befindet und in Fluidkommunikation mit dem Erststufenverdichter ist, wobei der Zwischenkühler konfiguriert ist, um Arbeitsfluidfluss (A) zu kühlen, der aus dem Erststufenverdichter austritt; und
einen Rekuperator (70) hinter der Zweitstufenturbine und in Wärmekommunikation mit dem Zweitstufenverdichter, wobei der Rekuperator konfiguriert ist, um unter Verwendung von Motorabgas (E) Arbeitsfluid (D) zu erwärmen, das aus dem Zweitstufenverdichter austritt, wobei der Zwischenkühler und der Rekuperator radial auswärts der Brennkammer angeordnet sind.

10. Getriebeturbofanmotor nach Anspruch 9, wobei der Fan (24), die Niedrigdruckspule (30) und die Hochdruckspule (40) seriell angeordnet sind, sodass die Niedrigdruckspule an ihrem vorderen Ende mit dem Fan verbunden ist und an ihrem hinteren Ende mit der Hochdruckspule verbunden ist.

11. Getriebeturbofanmotor nach Anspruch 9 und 10, wobei die Niedrigdruckspule (30) den Erststufenverdichter (32) und die Zweitstufenturbine (34) beinhaltet, wobei sich die Zweitstufenturbine hinter dem Erststufenverdichter befindet; und/oder
wobei die Hochdruckspule (40) die Erststufenturbine (42) und den Zweitstufenverdichter (44) beinhaltet, wobei die Erststufenturbine vor dem Zweitstufenverdichter angeordnet ist.

12. Getriebeturbofanmotor nach Anspruch 9 bis 11, wobei der Zweitstufenverdichter (44) ein Zentrifugalflussverdichter ist.

13. Getriebeturbofanmotor nach Anspruch 9 bis 12, ferner beinhaltend einen Getriebekasten (28), der den Fan (24) an die Niedrigdruckspule (30) koppelt; und/oder
ferner beinhaltend einen zusätzlichen Getriebekasten (48), der mit einem hinteren Ende der Hochdruckspule (40) verbunden und entlang der Motorachse (R) angebracht ist.

## Revendications

1. Moteur à turbine à gaz (10), comprenant :
un compresseur de premier étage (32) ;
un refroidisseur intermédiaire (60) en communication fluidique avec le compresseur de premier étage et configuré pour refroidir un fluide de travail lorsqu'il sort du compresseur de premier étage ;
un compresseur de second étage (44) en communication fluidique avec le refroidisseur intermédiaire ;
une chambre de combustion (50) en communication fluidique avec le compresseur de second étage ; et
un récupérateur (70) en communication fluidique avec la chambre de combustion et configuré pour chauffer le fluide de travail lorsqu'il sort du compresseur de second étage à l'aide de l'échappement du moteur, dans lequel le refroidisseur intermédiaire et le récupérateur sont agencés radialement à l'extérieur de la chambre de combustion,
**caractérisé en ce que** le compresseur de second étage (44) est un compresseur à haute pression à écoulement inversé configuré pour transporter du fluide de travail axialement vers l'avant et radialement vers l'extérieur par rapport à un axe de rotation (R) du moteur.

2. Moteur (10) selon la revendication 1, dans lequel le refroidisseur intermédiaire (60) est en communication fluidique avec le compresseur de premier étage (32) sur son extrémité avant et en communication fluidique avec le compresseur de second étage (44) sur son extrémité arrière.

3. Moteur (10) selon la revendication 1, dans lequel le refroidisseur intermédiaire (60) est un refroidisseur intermédiaire à écoulement radial ; et
de préférence dans lequel le refroidisseur intermédiaire (60) est configuré pour faire s'écouler un fluide de travail radialement vers l'extérieur pour un refroidissement avec de l'air de dérivation de moteur.

4. Moteur (10) selon la revendication 1, dans lequel le refroidisseur intermédiaire (60) est un refroidisseur intermédiaire du type à plaque à écoulement transversal ; et/ou
dans lequel le récupérateur (70) est un récupérateur à écoulement inversé.

5. Moteur (10) selon la revendication 1, dans lequel le refroidisseur intermédiaire (70) est un échangeur de chaleur du type à plaque à écoulement à contre-courant.

6. Moteur (10) selon la revendication 1, dans lequel le récupérateur (70) est en communication fluidique avec le compresseur de second étage (44) sur son extrémité arrière et en communication fluidique avec la chambre de combustion (50) sur son extrémité avant.

7. Moteur (10) selon la revendication 1, dans lequel le refroidisseur intermédiaire (60) est un premier refroidisseur intermédiaire et incluant en outre un second refroidisseur intermédiaire décalé de manière circonférentielle du premier refroidisseur intermédiaire.

8. Moteur (10) selon la revendication 7, dans lequel le récupérateur (70) est adjacent de manière circonférentielle à la fois au premier et au second refroidisseur intermédiaire ; et/ou
dans lequel le récupérateur (70) est un premier récupérateur et incluant en outre un ou plusieurs seconds récupérateurs, lesdits un ou plusieurs seconds récupérateurs étant adjacents de manière circonférentielle au second refroidisseur intermédiaire.

9. Moteur selon l'une quelconque des revendications précédentes dans lequel le moteur est un moteur à turbosoufflante à réducteur, comprenant :
une soufflante (24) reliée à une boîte d'engrenages (28) ;
un corps à basse pression (30) incluant le compresseur de premier étage (32) et une turbine de second étage (34), dans lequel le compresseur de premier étage est axialement adjacent à la turbine de second étage et le corps est relié à la boîte d'engrenages à son extrémité avant ;
un corps à haute pression (40) incluant une turbine de premier étage (42) et le compresseur de second étage (44), dans lequel la turbine de premier étage est axialement à l'avant du compresseur de second étage et le corps est relié au corps à basse pression à son extrémité avant ;
dans lequel le refroidisseur intermédiaire (60) est à l'arrière de la turbine de second étage et en communication fluidique avec le compresseur de premier étage, dans lequel le refroidisseur intermédiaire est configuré pour refroidir un écoulement de fluide de travail (A) sortant du compresseur de premier étage ; et
un récupérateur (70) à l'arrière de la turbine de second étage et en communication thermique avec le compresseur de second étage, dans lequel le récupérateur est configuré pour chauffer un fluide de travail (D) sortant du compresseur de second étage à l'aide de l'échappement du moteur (E), dans lequel le refroidisseur intermédiaire et le récupérateur sont agencés radialement à l'extérieur de la chambre de combustion.

10. Moteur à turbosoufflante à réducteur selon la revendication 9, dans lequel la soufflante (24), le corps à basse pression (30) et le corps à haute pression (40) sont agencés en série de sorte que le corps à basse pression est relié à la soufflante sur son extrémité avant et est relié au corps à haute pression sur son extrémité arrière.

11. Moteur à turbosoufflante à réducteur selon la revendication 9 et 10, dans lequel le corps à basse pression (30) inclut le compresseur de premier étage (32) et la turbine de second étage (34), la turbine de second étage étant à l'arrière du compresseur de premier étage ; et/ou dans lequel le corps à haute pression (40) inclut la turbine de premier étage (42) et le compresseur de second étage (44), la turbine de premier étage étant agencée à l'avant du compresseur de second étage.

12. Moteur à turbosoufflante à réducteur selon la revendication 9 à 11, dans lequel le compresseur de second étage (44) est un compresseur à écoulement centrifuge.

13. Moteur à turbosoufflante à réducteur selon la revendication 9 à 12, incluant en outre une boîte d'engrenages (28) couplant la soufflante (24) au corps à basse pression (30) ; et/ou
incluant en outre un boîtier d'entraînement des accessoires (48) relié à une extrémité arrière du corps à haute pression (40) et monté le long de l'axe de moteur (R).
